# EUROPEAN PATENT SPECIFICATION

(11) **EP 3 695 701 B1**
(45) Date of publication and mention of the grant of the patent: **12.07.2023**
(21) Application number: 20156621.3
(22) Date of filing: 11.02.2020
(51) Int. Cl.: A01D 34/00

(54) **ROBOTIC VEHICLE FOR BOUNDARIES DETERMINATION**
ROBOTERFAHRZEUG ZUR BEREICHSBESTIMMUNG
VÉHICULE ROBOTISÉ POUR LA DÉTERMINATION DE LIMITES

(30) Priority: 14.02.2019 EP 19157247
(43) Date of publication of application: 19.08.2020
(73) Proprietor: Stiga S.P.A., 31033 Castelfranco Veneto TV (IT)
(72) Inventor: ROBINSON, Sean, 31033 Castelfranco Veneto (TV) (IT); SCAPIN, Michele, 36061 Bassano del Grappa (VI) (IT); CECCHETTO, Mauro, 35018 San Martino di Lupari (IT); SCHMIDT, Alexander, 8041 Graz (AT); MOOSBRUGGER, Anton, 8041 Graz (AT)
(74) Representative: Richardt Patentanwälte PartG mbB

(56) References cited:
- WO-A1-2016/097891
- US-A1- 2015 271 991

## Description

### BACKGROUND

The invention relates to a robotic vehicle for soil cultivation, a method for operating a robotic vehicle and a computer program product.

A robotic lawn mower is an autonomous robot used to maintain lawn grass. A typical robotic lawn mower requires the user to continuously set up a border wire around the lawn that defines the area to be mowed. The robot uses this wire to locate the boundary of the area to be trimmed. However, this border definition requires multiple user interventions.

The WO 2016/097891 A1 refers to a robotic vehicle, which may include one or more functional components configured to execute a lawn care function, a sensor network comprising one or more sensors configured to detect conditions proximate to the robotic vehicle, a positioning module configured to determine robotic vehicle position using a first sensor of the sensor network, and a position quality analysis module configured to perform a qualitative assessment of position information determined via the first sensor. The position quality analysis module is further configured to determine whether the position information determined via the first sensor is indicative of an impaired area.

The US 2015/0271991 A1 refers to a robot lawnmower including a robot body, a drive system, a localizing system, a teach monitor, and a controller in communication with one another. The drive system is configured to maneuver the robot lawnmower over a lawn. The teach monitor determines whether the robot lawnmower is in a teachable state. The controller includes a data processing device and non-transitory memory in communication with the data processing device. The data processing device executes a teach routine when the controller is in a teach mode for tracing a confinement perimeter around the lawn as a human operator pilots the robot lawn mower, when the robot lawnmower is in the teachable state, the teach routine stores global positions determined by the localizing system in the non-transitory memory, and when the robot lawnmower is in the unteachable state, the teach routine issues an indication of the unteachable state.

### SUMMARY

It is an objective to provide for an improved robotic vehicle for soil cultivation, an improved method for operating a robotic vehicle and a computer program product.

Example embodiments provide a robotic vehicle for performing a movable operation in a workable area in accordance with a planned path. The movable operation comprises a soil cultivation. The robotic vehicle comprises a memory and a processor. The memory comprises instructions, wherein execution of the instructions by the processor causes the robotic vehicle to: detect, in a current position of the vehicle, a change in current boundaries of the workable area; update (or change) the workable area by changing (or shifting or adjusting) the current boundaries of the workable area, the changed boundaries becoming the current boundaries, wherein the update is performed such that the change does not exceed a predefined change threshold distance; and perform the movable operation using a re-planned path based on the detected change. For that purpose, execution of the instructions by the processor may cause the robotic vehicle to re-plan a path that is to be followed by the robotic vehicle in order to perform the movable operation.

It should be noted that the change threshold should preferably only be applied if a possible change in the boundary would result in an increase in the area to be processed. The vehicle should always have the possibility to avoid an obstacle. In this sense, an obstacle is also a change in the boundary which results in a reduction of the area to be worked on or processed.

A robotic vehicle may be a self-propelled vehicle that autonomously moves within the workable area. For example, the robotic vehicle may be battery-powered and may make use of a vehicle base in order to recharge batteries of the robotic vehicle at the base. The robotic vehicle may be configured to automatically travel to the base in order to recharge the batteries at the base.

The workable area may be a subarea of a larger work area. The work area may comprise non-workable regions or subareas (e.g. non-mowable regions) that may not be suitable for performing the movable operation. For example, the non-workable areas may comprise obstacles and/or areas that a user defined as non-workable areas. The obstacles may define boundaries that delimit the workable area. The workable area may be the work area excluding or without the non-workable areas. A configuration of the work area may, for example, describe or indicate at least part of these different areas of the work area. The configuration may change over time. However, the changes may be non-controllable changes such as natural changes caused by whether conditions etc. This may require a lot of user interventions in order to adapt the workable area in accordance with configuration changes. The configuration may be provided as position data in the robotic vehicle.

For example, the robotic vehicle may be configured to access position data indicative of the boundaries and/or of the workable area. For example, the robotic vehicle may store the position data. In another example, the position data may be stored in a remote database system, wherein the robotic vehicle is configured to access e.g. query, the position data in the database system via a network connection such as the internet. The position data may, for example, comprise boundary position data indicating locations of the boundaries of the workable area. The position data may further comprise workable area position data indicating locations of the workable area itself. Any of these locations may be represented by grid points or coordinate points. The position data may, for example, be used for planning a path that is to be followed by the vehicle robot in order to perform the movable operation.

The boundary position data may be acquired during an initialization phase of the vehicle where a user manually guides the vehicle along the boundary and in this way defines the boundary. It is also possible that the boundary is defined by other techniques known from the state of the art, e.g. by signal lines laid in the ground which define the boundary.

The robotic vehicle may be configured to use the position data for planning a path. The boundary position data may be used by the robotic vehicle in order to keep the robotic vehicle movement within the workable area. For example, by comparing its current position with the boundary position data, the robotic vehicle may avoid performing the movable operation beyond the workable area. The updating of the workable area may comprise updating the position data. For example, changing the current boundaries may comprise replacing by the robotic vehicle the current boundary position data by new boundary position data that reflects the changed boundaries. The position data may, for example, be provided in different formats. In one example, the position data may be provided as a grid of points or of cells (e.g. a grid point may represent a respective grid cell) in association with cell information. The cells of the gird may have a square form or other form such as a triangle. The size of the cells may be defined or controlled e.g. depending on user needs or on the level of details required for path planning.

The robotic vehicle may be configured to perform one or more predefined localization methods for enabling the movable operation along the planed path. The localization method may enable the robotic vehicle to determine its position while moving in the workable area. The robotic vehicle may be configured to process the vehicle positions (e.g. determined by a localization method) such that the vehicle positions can be compared with the position data. For example, using a RF triangulation, optical methods like optical triangulation or by means of GNSS signals the robotic vehicle may determine where it is located. By matching its location to the position data, the robotic vehicle may perform the movable operation in an accurate manner.

The robotic vehicle may be configured to perform the movable operation using the planned path. This may improve the robotic vehicle's efficiency compared to performing the movable operation in a random pattern. The planned path may be determined using a predefined planning algorithm e.g. a planning algorithm that uses the position data. The robotic vehicle may be configured to perform the movable operation using a re-planned path based on the detected change. For example, using the updated boundary position data, the robotic vehicle may determine the re-planned path using the predefined planning algorithm.

The robotic vehicle may be configured to change the current boundaries in accordance with the detected change. For example, a change in the current boundaries may be detected by the vehicle using anyone of optical, radio (e.g. radar) or ultrasound technologies. The detection may reveal navigable or non-navigable positions. By comparing these positions with the boundary position data, the robotic vehicle may determine whether a change occurred or not. For example, by determining that a new detected position is not present in the boundary position data, the robotic vehicle may detect or determine that the boundaries changed.

For example, the change threshold distance may dynamically be determined depending on a position (i.e. location) of the boundary to be changed. For example, the workable area may have in a first part outer boundaries which are defined by small bushes bordering a steeply sloping embankment, and in a second part outer boundaries which are defined by bushes there and farmland behind them. Accordingly, a change of the boundary in the area of the slope should be done within strong limits, because otherwise (e.g. when removing the small bushes) the vehicle could come dangerously close to the slope. On the other hand, this does not play such a big role in the area of farmland, because here there is no danger for the vehicle.

The soil cultivation may comprise mowing of a lawn, core aerification (recommended practice for many lawns reducing soil compaction and thatch, improve surface drainage etc.), watering of soil areas etc. For example, the robotic vehicle is a robotic lawn mower.

It has to be noted, that generally the change threshold distance may be understood as a distance e.g. in cm or mm or meters. For example, the change threshold distance may define that the current boundary is permitted to be shifted or moved maximally by an amount of x centimeters.

According to one embodiment, the execution of the instructions by the processor further causes the robotic vehicle to automatically adapt the change threshold distance depending on conditions of an environment of the workable area. The change threshold distance may be time dependent. The robotic vehicle may automatically change the change threshold distance at predefined time points. For example, depending on the seasons, bushes forming boundaries of the workable area may change in size and form e.g. the bushes may grow up or the bushes may be cut etc. This may imply an inward or outward shifting of boundaries. Depending on the type of the change (which is time dependent) the change threshold distance may be set accordingly e.g. outward shifting may need to be more limited than inward shifting.

An example of the conditions of the environment is the amount of rainfall and hours of sunshine within a given period. If, for example, there was a regular alternation of a lot of rain and sun over several summer months, this indicates that bushes and plants that define the boundaries of the work area must have grown strongly. Accordingly, pruning will be more serious in autumn than would have been the case if the drought had persisted for a long time and the plants had hardly grown at all. Accordingly, it is envisaged that in the first case the threshold value will be higher than in the second case. If the threshold value were the same in both cases, if in the second case the bushes had been removed because they had dried out, the vehicle could exceed the original threshold far too far and thus move in an area not intended for the mobile operation, e.g. get stuck.

Another example is the detection of wind conditions which could push bushes in a certain direction. The vehicle could interpret the area thus released under the bushes as a shift of the boundary and thus drive dangerously close to the bushes. As soon as the wind would decrease during such a moving operation, the vehicle would be damaged by the bushes moving back. In such a case the threshold could be limited to a smaller value.

This embodiment may enable an optimal control of the movable area and thus may increase the movable operation efficiencies. This may further have the advantage of reducing or eliminating user interventions and thus providing more autonomy for the present robotic vehicle. This may also reduce the risk of damaging the robotic vehicle..

According to one embodiment, the change threshold distance is one of a set of different change threshold distances. Each change threshold distance of the set of change threshold distances is associated with a respective part of the work area. The update of the workable area comprises identifying the change threshold distance of the set of change threshold distances that corresponds to a location of the detected change, wherein the predefined change threshold distance is the identified change threshold distance. This is another example the dynamic determination of the threshold depending on a position (i.e. location) of the boundary to be changed.

In this example, boundaries may be defined by different obstacle objects e.g. different types of bushes, fences, stones etc. The change of the boundaries may thus be dependent on the type of objects and thus be dependent on their location in the workable area. This embodiment may enable to control time dependent and position dependent changes in the movable area.

According to one embodiment, the set of change threshold distances comprise a change threshold distance for inner boundaries and a change threshold distance for an outer boundary of the workable area. An "inner boundary" may be understood as a boundary which is completely surrounded by an "outer boundary". For example, the inner boundary could be defined by a free-standing object in the workable area, such as the boundary defined by a free-standing bush or building within the outer boundary.

The aim is preferably to prevent the vehicle from leaving the workable area under all circumstances. Leaving the workable area would be given if the vehicle drives too far beyond the outer boundary. While at the inner boundary "only" the danger exists that e.g. parts of the ground around the freestanding object mentioned above are unintentionally worked on, leaving the workable area to the outside poses the danger that the vehicle itself will be damaged or even lost. For this reason, it could be advantageous if the limits for the inner and outer boundaries could be selected differently.

For example, if the detected object is a tree, the object boundary may be a 2D projection onto the soil of at least part of the bush crown of the tree. The object boundary may, for example, be determined by the robotic vehicle using a 2D light detection and ranging (LiDAR) scanner.

According to one embodiment, the execution of the instructions by the processor further causes the vehicle to provide one or more reference boundaries; wherein exceeding the predefined change threshold distance is determined relative to the reference boundaries. For example, the reference boundaries are current boundaries of the workable area before the update is performed or predefined fixed boundaries. The latter embodiment of fixed boundaries may particularly be advantageous in case the boundary objects frequently change over time into the same direction. For example, in case the reference boundaries are current boundaries of the workable area before the update is performed, if a boundary changes N times with a same amount X in the same direction, the boundary may be shifted N times. This may result in that the initial boundary has finally been changed by N*X. However, this may result in the workable area extending into areas that are not permitted to by processed by the movable operation.

One example is a bush that is becoming increasingly stunted due to lack of water. So it becomes smaller and smaller, so that if there is no limit relative to a fixed "reference boundary", the vehicle would come closer and closer to the unworkable ground around the bush. This could damage the soil.

It should be noted that this may offer an advantage over a fixed reference boundary, which has been predefined by a user and placed as close as possible to the bush. The latter requires the user to manually specify very precisely where such a boundary should be placed. In the present embodiment, however, the vehicle can, for example, independently and even autonomously drive down the workable area in an initialization phase, acquire and detect the present boundary as "fixed" and, relative to this, reliably move the boundary later with the threshold value, if necessary.
bushes

According to one embodiment, in case the change exceeds the predefined change threshold distance, the execution of the instructions by the processor further causes the vehicle to provide the changed boundaries as boundaries obtained by a change equal to the change threshold distance. This may enable the robotic vehicle to automatically decide on the definition of the workable area without user interventions.

According to one embodiment, the detection of the change comprises: detecting an object inside the workable area, the object having an inner boundary; updating the workable area with the inner boundary of the object in case the object is detected with a predefined repeat pattern.. This may enable a controlled and systematic adaptation of the workable area, and thus may further increase the autonomy of the robotic vehicle.

In accordance with an embodiment, the repeat pattern satisfies anyone of the following: the object is detected for at least N predefined times within a predefined time interval or movable operation interval; the object is detected with a predefined minimum frequency within a predefined time interval or movable operation interval.

A movable operation interval is a number of times, the movable operation is completed covering the workable area.

An example could be an object permanently located in the workable area, which now defines an inner boundary of the workable area. For example, a bush planted later. This inner boundary surrounds an area that the vehicle had previously registered as to be processed. Accordingly, any planning option for planning the path will be designed in such a way that the vehicle attempts to enter this area with maximum effort. As soon as the predefined repeat pattern is recognized, the inner boundary of the area can now be defined as such for further planning and the area can be permanently excluded from further planning. As a result, further unsuccessful attempts by the vehicle to enter the area are prevented. This makes it possible to carry out and successfully complete the movable operation more quickly in such situations.

The robotic vehicle may be configured to navigate the work area using a grid based path planner, beacons or other techniques. Each of these techniques may provide a respective representation of the work area that may be used by the robotic vehicle. According to one embodiment, the vehicle comprises a set of discretized coordinate grid points (referred to by the grid), wherein a first set of points of the grid points have status values representing the boundaries of the workable area and a second set of points of the grid points have status values representing the workable area. A grid point may be referred to as a grid cell e.g. the vehicle comprises a grid of cells. For example, the grid and associated status values may be used by the robotic vehicle for detecting the change and the updating of the workable area. For example, boundaries may be changed by changing the status values of cells of the grid to indicate the changed boundaries. For example, a status value of 1 may indicate a boundary cell or boundary point and a status value of 0 may indicate a cell of the workable area that can be operated (using the movable operation like mowing, fertilizing, watering etc.) by the robotic vehicle. Other status values may, for example, be used e.g. to represent cells that are outside the workable area and beyond the boundaries. This embodiment may enable an efficient control of and systematic processing of the movable operation by the robotic vehicle. This may further be advantageous as the grid may be used or shared by multiple present vehicles.

The grid may further be used by the robotic vehicle to plan the movement of the robotic vehicle in the workable area. In order to improve the path planning process and the resulting movable operations, the grid may be augmented by information. According to one embodiment, each point of the gird points is associated with a quality value indicating the vehicle position determination accuracy when the vehicle is at the point, wherein the path is planed using points having a quality value higher than a predefined threshold. The quality values may, for example, be user defined e.g. the user may set different quality values for different regions of the workable area and/or for different points of time.

According to one embodiment, the update of the workable area comprises assigning points of the first set to the second set by changing the status values of the assigned points or assigning points of the second set to the first set by changing the status values of the assigned points and determining quality values of the assigned points.

According to one embodiment, determining of the quality value of a point assigned to the second set comprises predicting the quality value by interpolation of quality values of points of the second set neighboring the assigned point, or using the quality value of a point of the second set that is adjacent to the assigned point as the quality of value of the assigned point. This may save processing resources of the robotic vehicle that would otherwise be required for computing or acquiring the quality values of each assigned point using the method used for quality values determination of the other points.

According to one embodiment, the vehicle comprises a Global Navigation Satellite System, GNSS, receiver wherein execution of the instructions by the processor causes the vehicle for each point of a subset of the grid points at different first points in time performing an initialization process, the initialization process comprising: receiving at the first point in time a first set of GNSS signals from a vehicle base; receiving at the first point in time a second set of GNSS signals from the GNSS receiver; determining an accuracy of a location determination, the location determination being based on the second set of GNSS signals, the determination of the accuracy being based on a comparison of the signal qualities of the first set of GNSS signals and the second set of GNSS signals, wherein the quality value of the point is the determined accuracy.

The "vehicle base" is understood as a fixed base comprising a GNSS receiver for receiving the first set of GNSS signals. The purpose of the vehicle base may be manifold. For example, the base could serve as a shelter for the robot to protect it from the weather when the robot is not in use. The base could serve as a charging station for the robot. Or the base could serve as a reference position for the robot, in which case the exact position of the base should preferably be known. In this case a later exact position determination of the robot via differential GNSS (especially differential GPS) is possible. Differential Global Positioning Systems (DGPS) are e.g. enhancements to the Global Positioning System (GPS) which provide improved location accuracy, in the range of operations of each system. A fixed ground-based reference station may be used to broadcast the difference between the positions indicated by the GPS satellite system and its known fixed position. Receiver stations may correct their positions based on that difference.

GNSS signals may be signals originating from satellites of the GPS, GLONASS, Galileo or BeiDou system. The GNSS positioning for obtaining a receiver's position is derived through various calculation steps. In essence, a GNSS receiver measures the transmitting time of GNSS signals emitted from four or more GNSS satellites and these measurements are then used to obtain its position (i.e., spatial coordinates) and reception time.

It has to be noted that that location determination does not have to be performed in such a manner that a real spatial position is obtained from that. It may be sufficient to calculate the uncertainty that may exist in case a determination off the spatial position from the second set of GNSS signals would be performed. Typically, trilateration is used for GNSS based spatial position determination, wherein for the above described accuracy determination it may be sufficient to know "size" of the zone of uncertainty the spheres in trilateration will intersect.

In order to permit the robotic vehicle to determine at which grid point it is actually located, either the second set of GNSS signals may be used for that purpose or other means may be used that permits to determine the actual location of the vehicle. For example, any kinds of optical systems, acoustical systems and beacon guidance systems may be used for that purpose. Further, if available, a deduced reckoning navigation device of the vehicle may be used for that purpose.

This embodiment may have the advantage that the accuracy of a location determination is available at rather high accuracy. The accuracy of GNSS data may depend on many factors. One source of errors in the GNSS position accuracy originate from multipath effects. Multipath occurs when part of the signal from the satellite reaches the receiver after one or more reflections from the ground, a building, or another object. First at all, these reflected signals can interfere with the signal that reaches the receiver directly from the satellite. Second, due to the range delay in multipath due to the result of the reflection of the GNSS signal the position as determined using such a multipath signal is falsified. Another source of errors are weak signals. Signals from other high-frequency transmitters can interfere with the GNSS receiver even at low field strengths, resulting in measurement errors and interference from high-frequency signals. Potential sources of interference may, for example, include harmonics of the transmission frequencies of TV and radio transmitters, mobile telecommunication system networks and radar transmitters.

By comparing the signal qualities of the first set of GNSS signals and the second set of GNSS signals the (hypothetical) accuracy of a location determination based on the second set of GNSS signals is not solely relying on this second set of GNSS signals but also considers the first set of GNSS signals. The signal qualities like signal-to-noise ratios or signal intensities of the first and second set of GNSS signals may permit to identify and omit parts of the second set of GNSS signals that are of low quality, i.e. that may be multipath signals, signals disturbed by interference with other non-GNSS-based signals etc.

According to one embodiment, the execution of the instructions by the processor causes the vehicle to receive a user input indicating the predefined change threshold distance. For example, the robotic vehicle may be controlled via a control panel on a mower chassis of the robotic vehicle or wirelessly through other interactive platforms such as a smart phone, PC, etc. The user input may be received via the control panel or may be received from a smart phone via a wireless connection between the smart phone and the robotic vehicle.

According to one embodiment, the detection of the change is performed based on sensor data received from at least one of: one or more ultrasonic sensors; one or more infra-red reflex sensors; and one or more laser scanners. The sensors may or may not be part of robotic vehicle. The sensors may provide an accurate characterization of detected objects.

Further example embodiments provide a method for performing a movable operation in a workable area in accordance with a planned path. The movable operation comprises a soil cultivation. The method comprises:
- detecting, in a current position of the vehicle, a change in current boundaries of the workable area;
- updating the workable area by changing boundaries of the workable area, the changed boundaries becoming the current boundaries, wherein the update is performed such that the change does not exceed a predefined change threshold distance; and
- performing the movable operation using the planned path or a re-planned path based on the detected change.

Further example embodiments provide a computer program product comprising computer executable instructions to perform the method as described above.

### BRIEF DESCRIPTION OF THE DRAWINGS

The accompanying figures are included to provide a further understanding of examples, and are incorporated in and constitute part of this specification. In the figures:
FIG. 1 illustrates an example of a working environment for a robotic vehicle in accordance with an example of the present subject matter.
FIG. 2 illustrates a diagram describing an example structure of a robotic vehicle 200 in accordance with the present subject matter.
FIG. 3 is a flowchart of a method for performing a movable operation in a workable area by a robotic vehicle.
FIGS. 4A-4B provide a schematic drawing illustrating a process for adapting a workable area in accordance with an example of the present subject matter.
FIG. 5A provides a schematic drawing illustrating a process for changing a boundary in accordance with an example of the present subject matter.
FIG. 5B provides a schematic drawing illustrating a process for changing a boundary in accordance with an example of the present subject matter.
FIGS. 6A-6B provide a schematic drawing illustrating a process for representing the work area in accordance with an example of the present subject matter.
FIG. 7 is a flowchart of a method for mowing a workable area.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

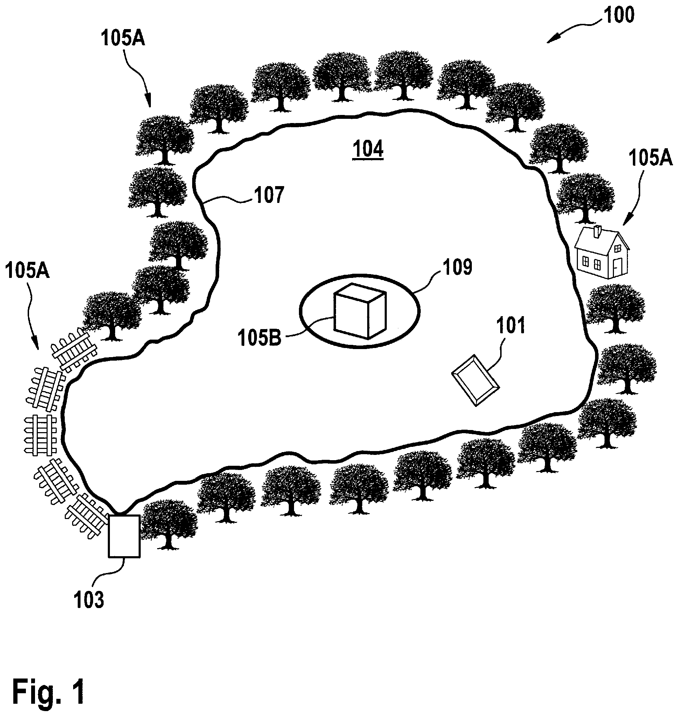

**FIG. 1** illustrates an example of a working environment for a robotic vehicle 101 in accordance with an example of the present subject matter. The robotic vehicle 101 may, for example, be configured to perform a movable operation. The movable operation may, for example, be a lawn care function that may be performed by the robotic vehicle 101 while moving. The lawn care function may comprise a mowing operation, watering operation or other lawn care functions. In the following, and for simplification purpose, the movable operation is described as a mowing operation e.g. the robotic vehicle 101 may be a mower.

The robotic vehicle 101 may be configured to perform a mowing operation in a work area or parcel 100 such as a garden or yard. The work area 100 has a configuration. The configuration may change over time. The configuration of the work area 100 may define a subarea of the work area 100 that is a workable area 104 (or mowable area), boundaries that delimit the workable area and/or characteristics of objects that define the boundaries. The workable area 104 may be an area in which the robotic vehicle 101 may be able to perform the mowing operation.

The objects that define the boundaries may collectively be referred to by 105. The objects 105 may be objects 105A that define at least part of the outer boundary 107. The outer boundary 107 completely surrounds the workable area 104. In one example, objects 105 may comprise objects 105B completely surrounded by other parts of the workable area 104 and the boundary 107 and which define one or more inner boundaries 109. The objects 105 may be temporal or permanent objects. Example of objects 105 may be bushes, walls, bushes, fences etc. Generally, objects 105 may comprise areas which are not permitted to be processed by the movable operation of the vehicle. In case the vehicle is a lawn mower that has to perform a mowing operation, these no-go areas could be areas without grass. For example, sidewalks, flower beds, etc.

Generally, it may not be relevant for the vehicle to know the characteristics of an object defining the boundaries 107 and 109. Nevertheless, object information for example comprising a size, shape and/or other information descriptive of the object may be useful for setting or adjusting the change threshold distance and/or defining,
- which ones of a set of different change threshold distances is to be used for respective portions or parts of a boundary,
- how to provide or select reference boundaries and/or
- whether to make use of a predefined repeat pattern and which repeat pattern to use.

For example, information descriptive of the object may state that the object is a bush. Consequently, a repeat pattern may be applied here which reflects the fact that bushes are typically growing steadily over a certain season of the year and then being suddenly cut e.g. in autumn.

At least part or all of the boundaries 107 and 109 may be defined without referring to physical objects by using boundary data that is stored in the robotic vehicle 101. Said boundary data indicates the at least part of the boundaries. Said boundary data may, for example, be user defined. The boundaries 107 and 109 define or delimit the workable area 104 in that the robotic vehicle 101 may use the boundaries to limit the mowing operation in the workable area 104.

The robotic mower 101 may be configured to define a path for performing the mowing over at least part of the workable area 104 in order to traverse the workable area along the planned path. The traversal may be performed while operating cutting blades to cut the grass on the workable area 104. In cases of other movable operations, the robotic vehicle may be configured to control another functional or working assembly that may replace the cutting blades.

The robotic mower 101 may be battery powered via one or more rechargeable batteries, wherein the batteries may be recharged by a charge station (or vehicle base) 103. The charge station 103 may be located at a predefined position on the work area 100. The robotic mower 101 may be configured to return to the charge station 103 in order to recharge the batteries.

The robotic mower 101 may, for example, be controlled (e.g. in order to start the movable operation) via a control panel on a mower chassis of the robotic mower 101 or wirelessly through other interactive platforms such as a smart phone, PC, etc.

While FIG. 1 shows a configuration of the work area that has a specific set of boundary objects, it will be appreciated that numerous configurations that define workable areas may exist.

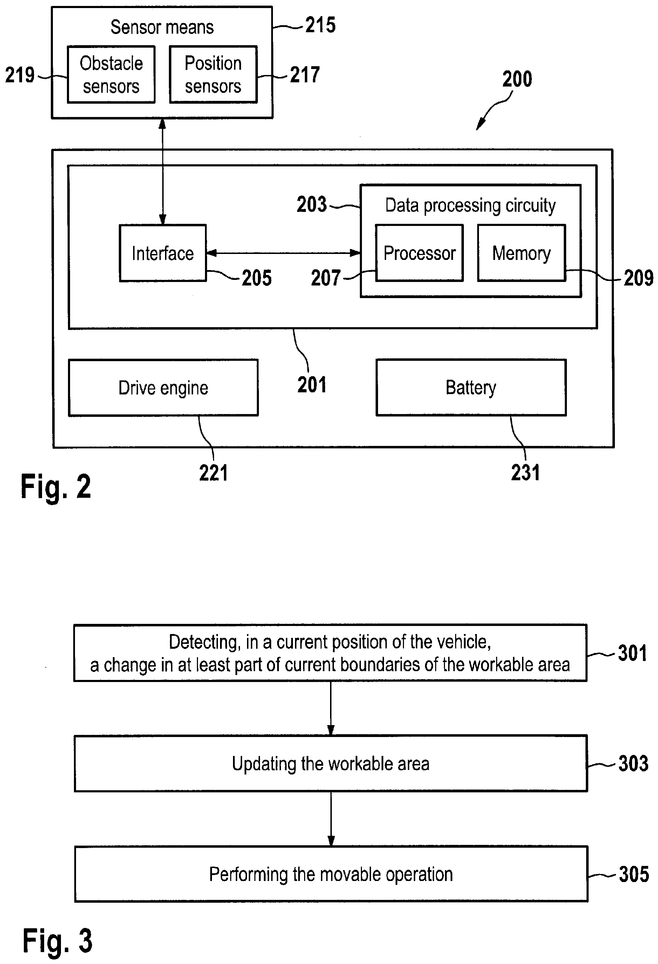

**FIG. 2** illustrates a diagram describing an example structure of a robotic vehicle 200 in accordance with the present subject matter. The robotic vehicle 200 comprises a control circuitry 201, drive engine 221 and a battery 231 for powering the control circuitry 201 as well as the drive engine 221. The drive engine 221 may, for example, include two digitally controlled electric motors for driving respective wheels or tracks of the robotic vehicle 200.

The control circuity 201 comprises a data processing circuitry 203. The data processing circuitry 203 may be in communication with a device interface 205. The data processing circuitry 203 may be embodied as a circuit chip (e.g., an integrated circuit chip) configured, with hardware, software or a combination of hardware and software, to perform operations described herein.

The data processing circuitry 203 may be configured by hardware or by a combination of hardware and software. The data processing circuitry 203 may, for example, comprise a processor 207 and memory 209. In one example, the processor 207 may be configured to execute instructions stored in the memory 209. In one example, the processor 207 may be embodied as an ASIC, FPGA or the like, and may thus be a specifically configured hardware for conducting the operations described herein.

The data processing circuitry 203 may be in communication with sensor means 215 to perform at least part of the present subject matter. For example, zero, one or more sensors of the sensor means 215 may be part of the robotic vehicle 200. The sensor means 215 may provide data or signals to the processor 207 to enable the processor 207 to perform at least part of the present subject matter. The sensor means 215 may, for example, comprise one or more position sensors 217 (using GNSS, optical or beacon technology or anything else) to determine a position of the robotic vehicle 200 based on position information provided by position sensors 217. The sensor means 215 may further comprise one or more obstacle sensors 219 to detect an obstacle or object as the robotic vehicle 200 moves through a workable area e.g. 104. The obstacle sensors 219 may enable the robotic vehicle 200 to identify the objects without physically contacting them. The obstacle sensors 219 may be configured to produce a signal upon detecting an obstacle. The robotic vehicle may be configured to process the produced data to determine characteristics of the detected obstacle. An obstacle may be an obstacle at the boundary of the workable area such as a wall or door. An obstacle may also be an object placed in the workable area. The sensor means 215 may further be adapted to detect the presence of any of the above mentioned boundaries, using e.g. a camera, radar, ultrasound means or means for detecting the presence or variation of an electromagnetic field generated by e.g. a perimeter wire. It is possible that the boundary 107/109 is established by a current-carrying perimeter wire, which can be detected by appropriate sensors of the vehicle 101. This allows the vehicle 101 to detect a boundary.

It has to be noted that generally the used change threshold distance may be determined relative to a fixed reference boundary, defined e.g. through such a perimeter wire. However, since the boundary wire cannot be laid exactly at the edge of the area to be worked and, for example, in the case of a lawn to be mowed, bushes protrude into the lawn, it can be specified relative to this fixed reference boundary that the lawn mower may not exceed the reference boundary by a threshold distance of more than 10 cm when cutting back the bushes. The cutting back of the bushes can again be detected by the above mentioned sensors, e.g. optically.

The processor 207 may provide or create guide signals for the drive engine 221 that are capable of driving the robotic vehicle 200 along a planned path. The obstacle sensors 219 may produce obstacle signals any time the robotic vehicle 200 is approaching an object e.g. 205A as the robotic vehicle 200 moves through the workable area e.g. 104. The position sensors 217 may produce position signals indicative of the robotic vehicle 200. The guide signals may, for example, be generated based on received obstacle signals and/or position signals.

The interface device 205 provides an interface between the signals produced by the obstacle sensors 219 and the processor 207 and also provides an interface between the guide signals generated by the processor 207 and the signals required to drive the electric motors the drive engine.

For the purpose of explanation, the subject matter described in following figures may be implemented in the robotic vehicle and the work area illustrated in FIG. 1 and FIG. 2, but is not limited to this implementation.

**FIG. 3** is a flowchart of a method for performing a movable operation in a workable area e.g. 104 by a robotic vehicle e.g. 101 and 200, in accordance with a planned path.

In step 301, a change in at least part of current boundaries of the workable area may be detected in a current position of the robotic vehicle. In step 303, in response to the detected change, the workable area may be updated or adjusted by changing or adjusting boundaries of the workable area. The changed boundaries become the current boundaries, wherein the update is performed such that the change does not exceed a predefined change threshold distance. In step 305, the movable operation may be performed (or continued if already started) using the planned path or a re-planned path based on the detected change.

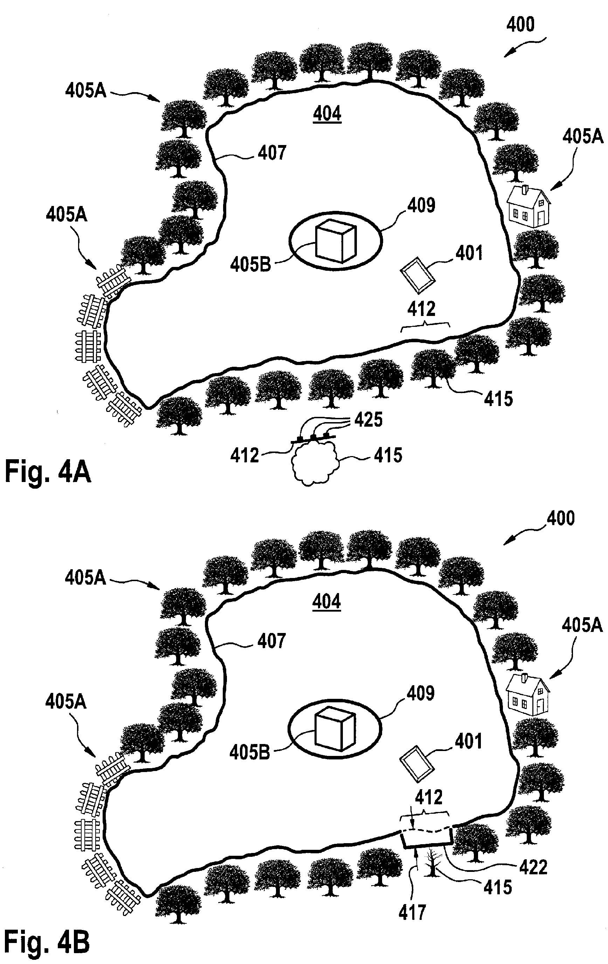

**FIG. 4A** is similar to FIG. 1 showing the status or configuration of the work area 400 at a predefined initial point of time.

The work area 400 has a configuration indicated by or comprising objects (collectively referred to by 405). The objects 405 may be objects 405A that define the outer boundary 407. The area 404 may be a workable area (e.g. mowable area) in which a robotic vehicle 401 may be able to perform the mowing operation. Objects 105 may further comprise object 405B inside the workable area 404 that defines inner boundary 409. The objects 405 may be temporal or permanent objects. For example, bush 415 of the outer boundary 407 is associated with a boundary portion 412 of the outer boundary. As illustrated in FIG. 4A, the boundary portion 412 may, for example, indicate the outer boundary defined by the bush 415. The robotic vehicle 401 may, for example, store boundary position data that indicates the boundaries 407 and 409. The stored boundary position data may comprise bush position data indicative of positions 425 the boundary portion 412.

At a later point of time, at least part of the boundaries 407 and 409 may change. For example, as shown in **FIG. 4B****,** bush 415 of the outer boundary 407 has been cut resulting in a cut bush 415 having a size smaller than its size at the initial point of time. The size reduction of the bush 415 may indicate a change 417 in at least part of the boundaries 407, 409 of the workable area 404. For example, after cutting the bush 415 the new portion 422 (referred to as changed boundary portion) indicates a recess of the boundary resulting from cutting back the bush 415. Thus, the workable area 404 may be updated by changing the boundary 407 in accordance with the detected change 417. For example, the update of the workable area 404 may be performed by changing the boundary 407 so that the boundary portion 412 is replaced by the changed boundary portion 422. This change may increase the workable area 404.

The change 417 may, for example, be detected, when the robotic vehicle is in a given position of the robotic vehicle 401, as follows. The cut bush 415 may be detected by robotic vehicle 401. The detection of the cut bush 415 may be performed using obstacle sensors e.g. 219 such as LIDAR sensor. For example, the robotic vehicle 401 may receive data or signals from the obstacle sensors indicating new outer contours of the cut bush 415 e.g. the robotic vehicle 401 may process the received data to determine the new outer contours. The outer contours define new positions or new boundary position data around the bush to which the vehicle 401 may move without touching the bush 415. For each new position of the new positions, the robotic vehicle 401 may, for example, determine a distance 417 separating the presently valid boundary position of the robotic vehicle 401 and the new position.

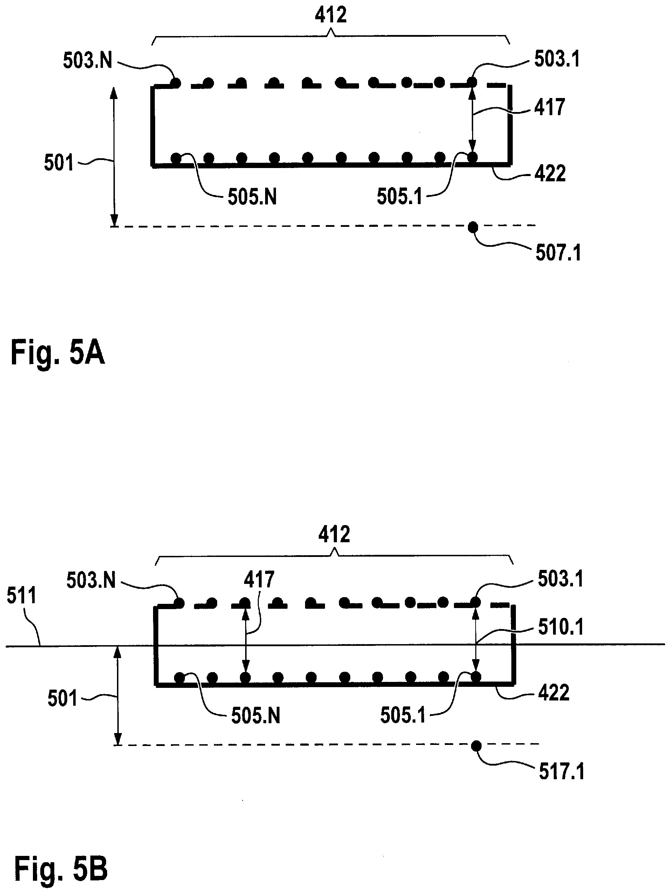

In one example, the update of the workable area 404 may be performed by replacing the boundary position data related to the bush by the new positions to reflect the portion 422. Other examples for updating the workable area 404 are described with reference to FIGS. 5A-B

**FIG. 5A** is a schematic drawing illustrating a process for changing a boundary in accordance with an example of the present subject matter. For purpose of clarity, the example of boundary change of FIG. 4B is used herein.

As shown in FIG. 5A, the boundary portion 412 of the boundary 407 has been changed by shifting it outwardly to become the changed boundary portion 422 of the boundary 407, after the change is occurred.

As shown in FIG. 5A, the boundary portion 412 may be represented by positions 503.1-N which are stored as the boundary position data as described with reference to FIGS. 4A-B.

The boundary portion 412 has been shifted by the detected change 417. For simplification purpose, the same change 417 is applied to different positions 503.1-N of the boundary portion 412. The shifting may be performed, in one example, by shifting by the robotic vehicle the positions 503.1-N in the stored boundary position data by the detected change 417 in order to obtain new positions 505.1-N representing the changed boundary portion 422. In another example, the shifting may comprise replacing by the robotic vehicle 101 the positions 503.1-N by the new positions 505.1-N.

FIG. 5A further illustrates a change threshold distance 501. The change threshold distance 501 may, for example, be used in accordance with the present example to control and limit the change of the boundaries 407 and 409. The change threshold distance 501 may, for example, be position dependent e.g. for each type of boundary objects a change threshold distance may be provided. For example, for the work area 100, different change threshold distances may be provided for boundaries defined by bushes, boundaries defined by a house, and boundaries defined by fence boundaries. This may enable to obtain accurate and optimal workable areas for performing the movable operations.

For example, for a given position e.g. 503.1 of the boundary position data that may be shifted by the change 417, the robotic vehicle may calculate a first shift of the given position 503.1 by the change threshold distance 501 resulting in position 507.1 and may calculate a second shift of the given position 503.1 by the detected change 417 resulting in position 505.1. By comparing the two positions 505.1 and 507.1, the robotic vehicle may determine based on the comparison results if the change performed for the given position 503.1 does not exceed the change threshold distance 501. For example, the robotic vehicle may determine if the calculated second shift results in a position that is beyond the position calculated from the first shift.

**FIG. 5B** is a schematic drawing illustrating a process for changing a boundary in accordance with an example of the present subject matter. For purpose of clarity, the example of boundary change of FIG. 4B is used herein.

As shown in FIG. 5A, the boundary portion 412 of the boundary 407 has been changed by shifting it outwardly to become the changed boundary portion 422 of the boundary 407, after the change occurred. The boundary portion 412 may be represented by positions 503.1-N which are stored as the boundary position data as described with reference to FIGS. 4A-B.

FIG. 5B further illustrates a change threshold distance 501 and a reference boundary 511. For example, the robotic vehicle may store reference position data that defines the reference boundary 511. The reference boundary 511 may, for example, be user defined. Providing a reference boundary may be advantageous in particular if the changes in the boundaries occur multiple times. For example, if the bush 415 is cut four times the boundary may be shifted 4 times (e.g. by the same amount), wherein each change is performed (in case the reference boundary is not used) from the current positions of the boundary. However, this may end-up with a workable area that includes obstacles or that is a no-go area. To the contrary, the reference boundary is fixed and defines together with the change threshold distance the maximum distance the border can be shifted away from the reference boundary.

For example, for a given position e.g. 503.1 of the boundary position data that has to be shifted by the change 417, the robotic vehicle may determine an associated reference position 510.1 of the reference position data. For example, the reference positions 510.1 to 510. N are connected by the reference boundary, wherein, with respect to a reference position 510.1, one of the points 503.1.. N is associated with this reference position. This is the point 503.1..N which is closest to the reference position and which connects to the reference position with a straight line perpendicular to the reference boundary at said reference position. The robotic vehicle may calculate a first shift of the reference position 510.1 by the change threshold distance 501 resulting in position 517.1 and may calculate a second shift of the given position 503.1 by the detected change 417 resulting in position 505.1. By comparing the two positions 505.1 and 517.1, the robotic vehicle may determine based on the comparison results if the change performed for the given position 503.1 does not exceed the change threshold distance 501. For example, the robotic vehicle may determine if the calculated second shift results in a position that is beyond the position calculated from the first shift.

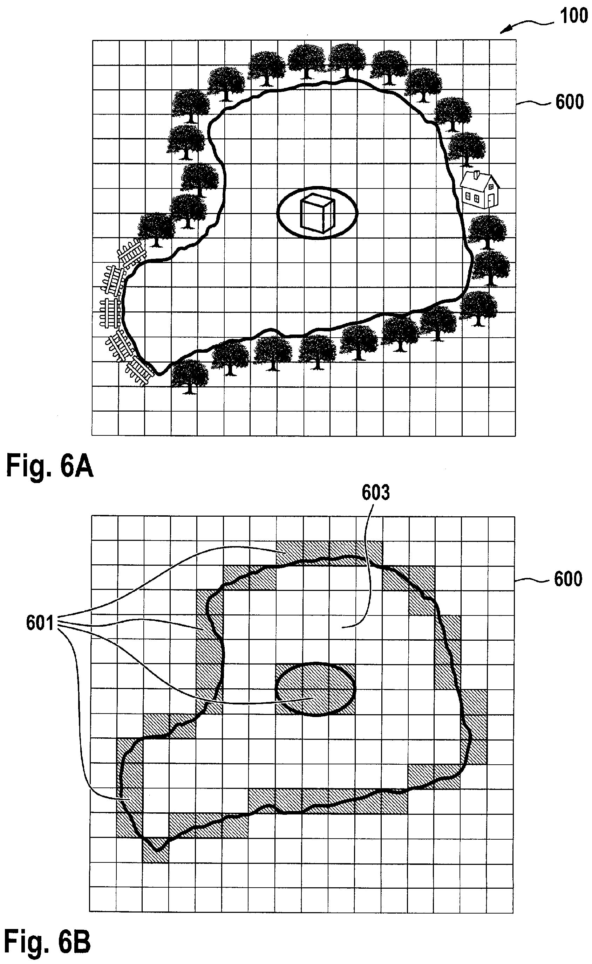

**FIG. 6A** is a diagram illustrating a representation of the work area 100. The work area 100 may be represented by a grid of cells 600 (also referred to as grid of points, where a point may represent a cell).

Each cell of the grid of cells 600 may be associated with a status value that indicates the configuration of the work area 100 at that cell. For example, as indicated in FIG. 6B a first set of cells 601 (filled cells of FIG. 6B) may have a status value that indicates that the corresponding parts of the work area is a boundary area. FIG. 6B further shows a second set of cells 603 (non-filled cells) which are delimited by the first set of cells and may have a status value that indicates that the corresponding parts of the work area is a workable area

The robotic vehicle may, for example, store the grid of cells 600 and associated status values. The robotic vehicle may use the grid of cells and associated status values in order to perform a mowing operation following a planned path e.g. if a status value of a cell indicates that cell is a boundary cell, the vehicle robot may avoid to traverse that cell.

The grid of cells 600 may be advantageous as it may be used by the robotic vehicle to perform in an efficient manner the change of the boundaries e.g. as described with reference to FIGS. 4A to 5B. For example, a subset of cells of the first set of cells 601 may correspond to the boundary portion 412, and the boundary position data may comprise status values of that subset of cells 601. Changing the boundary portion 412 as described in FIGS. 4A to 5B may be performed by identifying new cells of the grid of cells 600 that correspond to the changed boundary portion 422. The new cells may be associated with status values indicating boundary areas and status values of the subset of cells may be changed to status values that indicate that they are movable cells.

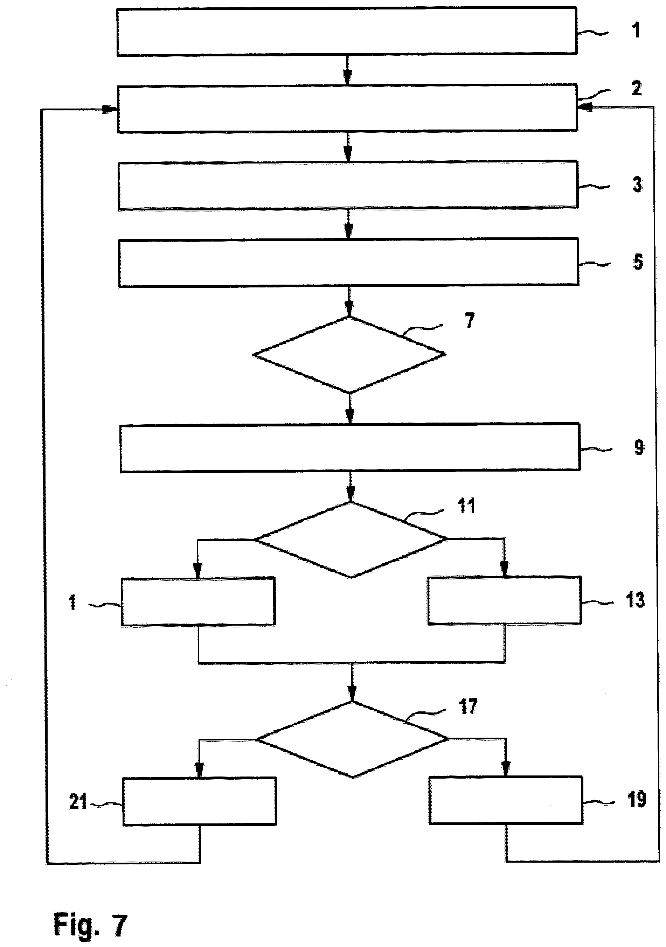

**FIG. 7A** is a flowchart of a method for mowing a workable area 724 of a work area 722 of FIG. 7B in accordance with an example of the present subject matter. In this example, the robotic vehicle may be a mower. The work area 722 may, for example, have a given configuration at a given point of time that indicates objects characteristics such as their placements in the work area 722. The given configuration may further define which area of the work area is mowable and boundaries delimiting the mowable area. The mower may have access to information indicating or representing the given configuration. Such information may be provided as a grid. The grid may comprise cells as shown in FIGS. 6A-B. For example, the mower may store the grid of cells 600 of work area 100 in association with the status values.

A path may be determined or planned in step 701. The path may connect a starting point of the robotic vehicle to a target point in the workable area. The path may, for example, be determined using the grid of cells 600 such that the mower may follow a sequence of cells of the workable area that connects the two cells of the starting and target points. The path is typically chosen so that, for example, all grid points are systematically traversed one after the other. Here the processing width of the vehicle, e.g. the mowing width, is taken into account.

Before or while moving along the determined path (step 702), the configuration may change in that a change may affect at least one given object defining at least part of the boundaries (outer and/or inner boundaries). For example, a user may have cut a bush or a bush may have grown or an object has been moved or removed etc. The mower may be configured to detect in step 703 the object upon reaching a certain position along the determined path. For example, the mower may use sensor data to detect the e.g. contour of the object and to determine one or more new boundary position (boundary position data) regarding boundaries associated with the detected object. By comparing or matching in step 705 the new boundary positions with boundaries stored in a memory of the mower, the mower may determine (inquiry step 707) if a change occurred. The change may result in a new configuration of the work area different from the given configuration. E.g. the mower is regularly processing sensor data while moving in order to determine if a change occurred.

If (inquiry step 707) a change is occurred, the mower may define an adjustment in step 709 of a boundary portion of the boundaries that corresponds to the new boundary and thus the new boundary position data in order to take into account the occurred change. For example, the adjustment may be an inward or outward shifting of the boundary portion.

The mower may determine (inquiry step 711) if the adjusted boundary that results from the adjustment is within the tolerance range or change threshold distance or not. If there are multiple tolerance ranges, inquiry step 711 may further comprise identifying the tolerance range that corresponds to the position of the detected object.

If the adjusted boundary is within the tolerance range the adjusted boundary may be confirmed and maintained in step 713 by the mower; otherwise the mower may readjust the boundary such that it fits within the tolerance range in step 715.

The mower may determine (inquiry step 717) if the planned path is to be immediately re-planned or not. It may be determined whether the currently followed path is left and a new path planning is immediately carried out in step 721 (resulting in a new determined path), which takes the shifted boundary into account ad hoc, or whether still the old path is to be followed (step 719) and this shifted boundary should only be considered in the next processing round. A corresponding decision can be made, for example, on the basis of the remaining energy reserves of the vehicle. If there is only little energy left to complete the processing operation, it might be more reasonable to finish it regularly without changing the path.

### List of reference numerals

- 100: work area
- 101: robotic vehicle
- 103: vehicle base
- 104: workable area
- 105: obstacles
- 107: outer boundary
- 109: inner boundary
- 200: robotic vehicle
- 201: control circuitry
- 203: data processing means
- 205: interface
- 207: processor
- 209: memory
- 215: sensor means
- 217: position sensors
- 219: obstacle sensors
- 221: drive engine
- 231: battery
- 301-305: steps
- 400: work area
- 401: robotic vehicle
- 404: workable area
- 405: obstacles
- 407: outer boundary
- 409: inner boundary
- 412: boundary portion
- 415: tree
- 417: change
- 422: changed boundary portion
- 425: positions
- 501: change threshold distance
- 503: positions
- 505: positions
- 507: position
- 513: reference boundary
- 517: position
- 600: grid
- 601: first set of cells
- 603: second set of cells
- 701-721: steps

## Claims

1. A robotic vehicle (101, 200, 401) for performing a movable operation in a workable area (104, 404, 724) in accordance with a planned path, the movable operation comprising a soil cultivation, the vehicle (101, 200, 401) comprising a memory (209) and a processor (207), the memory (209) comprising instructions, wherein execution of the instructions by the processor (207) causes the vehicle (101, 200, 401) to:
- detect, in a current position of the vehicle, a change (417) in current boundaries (107, 109, 407, 409) of the workable area (104, 404, 724), wherein the change in current boundaries results in an increase in the workable area, wherein the detection of the change (417) is performed based on sensor data characterizing a change in a characteristic of an object (105) defining the current boundaries;
- in response to the detection, update the workable area (104, 404, 724) by changing the current boundaries of the workable area (104, 404, 724), the changed boundaries (422) becoming the current boundaries, wherein the update is performed such that the change does not exceed a predefined change threshold distance (501, 741, 743); and
- perform the movable operation using a re-planned path based on the detected change (417).

2. The robotic vehicle of claim 1, wherein the execution of the instructions by the processor (107) further causes the vehicle to automatically adapt the change threshold distance (501) depending on conditions of an environment of the workable area.

3. The robotic vehicle of any of the preceding claims 1-2, wherein the change threshold distance (501, 741, 743) is one of a set of different change threshold distances, wherein each change threshold distance of the set of change threshold distances is associated with a respective part (740) of the workable area, wherein the update of the workable area comprises identifying the change threshold distance of the set of change threshold distances that corresponds to a location (412) of the detected change (417), wherein the predefined change threshold distance is the identified change threshold distance, the set of change threshold distances preferably comprising a change threshold distance specific for inner boundaries (109) and a change threshold distance specific for an outer boundary (107) of the workable area (104).

4. The robotic vehicle of any of the preceding claims, wherein the execution of the instructions by the processor (207) further causes the vehicle to provide one or more reference boundaries (513); wherein exceeding the predefined change threshold distance is determined relative to the reference boundaries (513), wherein optionally the reference boundaries (513) are the current boundaries (412) of the workable area (404) before the update is performed or predefined fixed boundaries.

5. The robotic vehicle of any of the preceding claims, wherein in case the change exceeds the predefined change threshold distance, the execution of the instructions by the processor (207) further causes the vehicle to provide the changed boundaries as boundaries (507) obtained by a change equal to the change threshold distance (501).

6. The robotic vehicle of any of the preceding claims, wherein the detection of the change comprises: detecting an object (105B) inside the workable area (104), the object having an inner boundary; updating the workable area (104) with the inner boundary of the object (105B) in case the object (105B) is detected with a predefined repeat pattern.

7. The robotic vehicle of claim 6, wherein the repeat pattern satisfies anyone of the following: the object is detected for at least N predefined times within a predefined time interval or movable operation interval; the object (105B) is detected with a predefined minimum frequency within a predefined time interval or movable operation interval.

8. The robotic vehicle of any of the preceding claims, wherein the vehicle comprises a set of discretized coordinate grid points (600), wherein a first set of points (601) of the grid points (600) have status values representing the boundaries (107, 109) of the workable area (104) and a second set of points (603) of the grid points (600) have status values representing the workable area (104), wherein optionally each point of the gird points (600) is associated with a quality value indicating the vehicle position determination accuracy when the vehicle is at the point, wherein the path is planed using points having a quality value higher than a predefined threshold.

9. The robotic vehicle of claim 8, the update of the workable area (104) comprises assigning points of the first set (601) to the second set (603) by changing the status values of the assigned points or assigning points of the second set (603) to the first set (601) by changing the status values of the assigned points and determining quality values of the assigned points.

10. The robotic vehicle of claim 9, further comprising determining of the quality value of the points assigned to the second set comprising predicting the quality value by interpolation of quality values of points of the second set neighboring the assigned points, or using the quality values of points of the second set that are adjacent to the assigned points as the quality of value of the assigned points.

11. The robotic vehicle of any of preceding claims 9 to 10, the vehicle comprising a Global Navigation Satellite System, GNSS, receiver (215) wherein execution of the instructions by the processor causes the vehicle for each point of a subset of the grid points at different first points in time performing an initialization process, the initialization process comprising: receiving at the first point in time a first set of GNSS signals from a vehicle base; receiving at the first point in time a second set of GNSS signals from the GNSS receiver; determining an accuracy of a location determination, the location determination being based on the second set of GNSS signals, the determination of the accuracy being based on a comparison of the signal qualities of the first set of GNSS signals and the second set of GNSS signals, wherein the quality value of the point is the determined accuracy.

12. The robotic vehicle of any of the preceding claims, wherein execution of the instructions by the processor (207) causes the vehicle to receive a user input indicating the predefined change threshold distance (501).

13. The robotic vehicle of any of the preceding claims, wherein the sensor data is received from at least one of: one or more ultrasonic sensors; one or more infra-red reflex sensors; and one or more laser scanners (219).

14. A method for performing a movable operation in a workable area in accordance with a planned path by a robotic vehicle, the movable operation comprising a soil cultivation, the method comprising:
- detecting (301), in a current position of the vehicle, a change in current boundaries of the workable area, wherein the change in current boundaries results in an increase in the workable area, wherein the detection of the change (417) is performed based on sensor data characterizing a change in a characteristic of an object (105) defining the current boundaries;
- in response to the detection, updating (303) the workable area by changing the current boundaries of the workable area, the changed boundaries becoming the current boundaries, wherein the update is performed such that the change does not exceed a predefined change threshold distance; and
- performing (305) the movable operation using a re-planned path based on the detected change.

15. A computer program product comprising computer executable instructions for a robotic vehicle according to any of claims 1-13 to perform the method of claim 14.

## Patentansprüche

1. Roboterfahrzeug (101, 200, 401) zur Durchführung eines beweglichen Betriebs in einem bearbeitbaren Bereich (104, 404, 724) in Übereinstimmung mit einem geplanten Pfad, der bewegliche Betrieb eine Bodenbearbeitung umfassend, wobei das Fahrzeug (101, 200, 401) einen Speicher (209) und einen Prozessor (207) umfasst, der Speicher (209) Anweisungen umfassend, wobei die Ausführung der Anweisungen durch den Prozessor (207) das Fahrzeug (101, 200, 401) dazu veranlasst:
- in einer aktuellen Position des Fahrzeugs eine Veränderung (417) aktueller Grenzen (107, 109, 407, 409) des bearbeitbaren Bereichs (104, 404, 724) zu detektieren, wobei die Veränderung aktueller Grenzen zu einer Vergrößerung des bearbeitbaren Bereichs führt, wobei die Detektion der Veränderung (417) auf Grundlage von Sensordaten erfolgt, die eine Veränderung eines Merkmals eines Objekts (105) charakterisieren, das die aktuellen Grenzen definiert;
- im Anschluss an die Detektion den bearbeitbaren Bereich (104, 404, 724) zu aktualisieren, indem die aktuellen Grenzen des bearbeitbaren Bereichs (104, 404, 724) geändert werden, wodurch die geänderten Grenzen (422) zu den aktuellen Grenzen werden, wobei die Aktualisierung so durchgeführt wird, dass die Veränderung eine vorab definierte Veränderungsschwellendistanz (501, 741, 743) nicht überschreitet; und
- den beweglichen Betrieb unter Einsatz eines auf Grundlage der detektierten Veränderung (417) neu geplanten Pfads durchzuführen.

2. Roboterfahrzeug nach Anspruch 1, wobei die Ausführung der Anweisungen durch den Prozessor (107) das Fahrzeug ferner dazu veranlasst, die Veränderungsschwellendistanz (501) je nach Bedingungen einer Umgebung des bearbeitbaren Bereichs automatisch anzupassen.

3. Roboterfahrzeug nach einem der Ansprüche 1-2, wobei die Veränderungsschwellendistanz (501, 741, 743) eine aus einem Satz verschiedener Veränderungsschwellendistanzen ist, wobei jede Veränderungsschwellendistanz des Veränderungsschwellendistanz-Satzes mit einem jeweiligen Teil (740) des bearbeitbaren Bereichs verknüpft ist, wobei die Aktualisierung des bearbeitbaren Bereichs ein Identifizieren der Veränderungsschwellendistanz des Veränderungsschwellendistanz-Satzes, die einem Standort (412) der detektierten Veränderung (417) entspricht, umfasst, wobei die vorab definierte Veränderungsschwellendistanz die identifizierte Veränderungsschwellendistanz ist, wobei der Veränderungsschwellendistanz-Satz bevorzugt eine Veränderungsschwellendistanz speziell für innenliegende Grenzen (109) und eine Veränderungsschwellendistanz speziell für eine äußere Grenze (107) des bearbeitbaren Bereichs (104) umfasst.

4. Roboterfahrzeug nach einem der vorstehenden Ansprüche, wobei die Ausführung der Anweisungen durch den Prozessor (207) das Fahrzeug ferner veranlasst, eine oder mehrere Referenzgrenzen (513) bereitzustellen, wobei ein Überschreiten der vorab definierten Veränderungsschwellendistanz relativ zu den Referenzgrenzen (513) bestimmt wird, wobei die Referenzgrenzen (513) optional die aktuellen Grenzen (412) des bearbeitbaren Bereichs (404), bevor die Aktualisierung durchgeführt wird, oder vorab definierte feste Grenzen sind.

5. Roboterfahrzeug nach einem der vorstehenden Ansprüche, wobei im Fall, dass die Veränderung die vorab definierte Veränderungsschwellendistanz überschreitet, die Ausführung der Anweisungen durch den Prozessor (207) das Fahrzeug ferner veranlasst, die veränderten Grenzen als Grenzen (507) bereitzustellen, die durch eine Veränderung erhalten werden, die der Veränderungsschwellendistanz (501) entspricht.

6. Roboterfahrzeug nach einem der vorstehenden Ansprüche, wobei die Detektion der Veränderung umfasst: Detektieren eines Objekts (105B) innerhalb des bearbeitbaren Bereichs (104), wobei das Objekt eine innere Grenze hat, Aktualisieren des bearbeitbaren Bereichs (104) anhand der inneren Grenze des Objekts (105B) im Fall, dass das Objekt (105B) mit einem vorab definierten Wiederholungsmuster detektiert wird.

7. Roboterfahrzeug nach Anspruch 6, wobei das Wiederholungsmuster eines von Folgendem erfüllt: das Objekt wird mindestens N vorab definierte Male innerhalb eines vorab definierten Zeitintervalls oder Intervalls eines beweglichen Betriebs detektiert; das Objekt (105B) wird mit einer vorab definierten Mindesthäufigkeit innerhalb eines vorab definierten Zeitintervalls oder Intervalls eines beweglichen Betriebs detektiert.

8. Roboterfahrzeug nach einem der vorstehenden Ansprüche, wobei das Fahrzeug einen Satz diskretisierter Koordinaten-Rasterpunkte (600) umfasst, wobei ein erster Satz Punkte (601) der Rasterpunkte (600) Statuswerte hat, die die Grenzen (107, 109) des bearbeitbaren Bereichs (104) repräsentieren, und ein zweiter Satz Punkte (603) der Rasterpunkte (600) Statuswerte hat, die den bearbeitbaren Bereich (104) repräsentieren, wobei optional jeder Punkt der Rasterpunkte (600) mit einem Qualitätswert verknüpft ist, der die Bestimmungsgenauigkeit der Fahrzeugposition angibt, wenn das Fahrzeug an dem Punkt ist, wobei der Pfad mit Punkten geplant wird, deren Qualitätswert höher als eine vorab definierte Schwelle ist.

9. Roboterfahrzeug nach Anspruch 8, wobei die Aktualisierung des bearbeitbaren Bereichs (104) das Zuweisen von Punkten des ersten Satzes (601) zum zweiten Satz (603) durch Ändern der Statuswerte der zugewiesenen Punkte oder das Zuweisen von Punkten des zweiten Satzes (603) zum ersten Satz (601) durch Ändern der Statuswerte der zugewiesenen Punkte und das Bestimmen von Qualitätswerten der zugewiesenen Punkte umfasst.

10. Roboterfahrzeug nach Anspruch 9, ferner das Bestimmen des Qualitätswertes der Punkte umfassend, die dem zweiten Satz zugewiesen sind, das Vorhersagen des Qualitätswertes durch Interpolation von Qualitätswerten von Punkten des zweiten Satzes, die benachbart zu den zugewiesenen Punkten liegen, oder das Verwenden der Qualitätswerte von Punkten des zweiten Satzes, die an die zugewiesenen Punkte angrenzen, als die Qualität des Wertes der zugewiesenen Punkte umfassend.

11. Roboterfahrzeug nach einem der vorstehenden Ansprüche 9 bis 10, das Fahrzeug einen Receiver (215) eines Globalen Navigationssatellitensystems, GNSS, umfassend, wobei die Ausführung der Anweisungen durch den Prozessor das Fahrzeug für jeden Punkt eines Teilsatzes der Rasterpunkte zu unterschiedlichen ersten Zeitpunkten dazu veranlasst, einen Initialisierungsprozess durchzuführen, der Initialisierungsprozess umfassend: Empfang, zum ersten Zeitpunkt, eines ersten Satzes von GNSS-Signalen von einer Fahrzeugbasis; Empfang, zum ersten Zeitpunkt, eines zweiten Satzes von GNSS-Signalen vom GNSS-Receiver; Bestimmung einer Genauigkeit einer Standortbestimmung, wobei die Standortbestimmung auf dem zweiten Satz von GNSS-Signalen basiert, wobei die Bestimmung der Genauigkeit auf einem Abgleich der Signalqualitäten des ersten Satzes von GNSS-Signalen und des zweiten Satzes von GNSS-Signalen basiert, wobei der Qualitätswert des Punktes die bestimmte Genauigkeit ist.

12. Roboterfahrzeug nach einem der vorstehenden Ansprüche, wobei die Ausführung der Anweisungen durch den Prozessor (207) das Fahrzeug dazu veranlasst, eine Benutzereingabe zu empfangen, die die vorab definierte Veränderungsschwellendistanz (501) angibt.

13. Roboterfahrzeug nach einem der vorstehenden Ansprüche, wobei die Sensordaten von mindestens einem von Folgendem empfangen werden: einem oder mehreren Ultraschallsensoren; einem oder mehreren Infrarot-Reflexsensoren; und einem oder mehreren Laser-Scannern (219).

14. Verfahren zum Durchführen eines beweglichen Betriebs in einem bearbeitbaren Bereich entsprechend einem geplanten Pfad durch ein Roboterfahrzeug, der bewegliche Betrieb eine Bodenbearbeitung umfassend, das Verfahren umfassend:
- Detektieren (301), in einer aktuellen Position des Fahrzeugs, einer Veränderung der aktuellen Grenzen des bearbeitbaren Bereichs, wobei die Detektion der Veränderung (417) auf Grundlage von Sensordaten erfolgt, die eine Veränderung eines Merkmals eines Objekts (105) charakterisieren, das die aktuellen Grenzen definiert;
- im Anschluss an die Detektion, Aktualisieren (303) des bearbeitbaren Bereichs durch Verändern der aktuellen Grenzen des bearbeitbaren Bereichs, wodurch die veränderten Grenzen zu den aktuellen Grenzen werden, wobei die Aktualisierung so durchgeführt wird, dass die Veränderung eine vorab definierte Veränderungsschwellendistanz nicht überschreitet; und
- Durchführen (305) des beweglichen Betriebs unter Einsatz eines auf Grundlage der detektierten Veränderung neu geplanten Pfads.

15. Computerprogrammprodukt, vom Computer ausführbare Anweisungen umfassend, um das Roboterfahrzeug nach einem der Ansprüche 1 bis 13 dazu zu veranlassen, das Verfahren nach Anspruch 14 durchzuführen.

## Revendications

1. Véhicule robotisé (101, 200, 401) pour effectuer une opération mobile dans une zone de travail (104, 404, 724) en conformité avec un trajet planifié, l'opération mobile comprenant une culture du sol, le véhicule (101, 200, 401) comprenant une mémoire (209) et un processeur (207), la mémoire (209) comprenant des instructions, dans lequel l'exécution des instructions par le processeur (207) fait en sorte que le véhicule (101, 200, 401) :
- détecte, dans une position actuelle du véhicule, une modification (417) dans des limites actuelles (107, 109, 407, 409) de la zone de travail (104, 404, 724), dans lequel la modification des limites actuelles a pour résultat une augmentation de la zone de travail, dans lequel la détection de la modification (417) est effectuée sur la base de données de capteur caractérisant une modification d'une caractéristique d'un objet (105) définissant les limites actuelles ;
- en réponse à la détection, mette à jour la zone de travail (104, 404, 724) en modifiant des limites actuelles de la zone de travail (104, 404, 724), les limites modifiées (422) devenant les limites actuelles, dans lequel la mise à jour est effectuée de sorte que la modification ne dépasse pas une distance de seuil de modification (501, 741, 743) prédéfinie ; et
- effectue l'opération mobile en utilisant un trajet replanifié sur la base de la modification (417) détectée.

2. Véhicule robotisé selon la revendication 1, dans lequel l'exécution des instructions par le processeur (107) fait en outre en sorte que le véhicule adapte automatiquement la distance de seuil de modification (501) en fonction de conditions d'un environnement de la zone de travail.

3. Véhicule robotisé selon l'une quelconque des revendications précédentes 1 ou 2, dans lequel la distance de seuil de modification (501, 741, 743) est une distance d'un ensemble de distances de seuil de modification différentes, dans lequel chaque distance de seuil de modification de l'ensemble de distances de seuil de modification est associé avec une partie respective (740) de la zone de travail, dans lequel la mise à jour de la zone de travail comprend une identification de la distance de seuil de modification de l'ensemble de distances de seuil de modifications qui correspond à une localisation (412) de la modification (417) détectée, dans lequel la distance de seuil de modification prédéfinie est la distance de seuil de modification identifiée, l'ensemble des distances de seuil de modification comprenant de préférence une distance de seuil de modification pour des limites intérieures (109) et une distance de seuil de modification spécifique pour une limite extérieure (107) de la zone de travail (104).

4. Véhicule robotisé selon l'une quelconque des revendications précédentes, dans lequel l'exécution des instructions par le processeur (207) fait en outre que le véhicule fournisse une ou plusieurs limites de référence (513) ; dans lequel un dépassement de la distance de seuil de modification prédéfinie est déterminé par rapport aux limites de référence (513), dans lequel, éventuellement, les limites de référence (513) sont les limites actuelles (412) de la zone de travail (404) avant que la mise à jour ne soit effectuée ou des limites fixes prédéfinies.

5. Véhicule robotisé selon l'une quelconque des revendications précédentes, dans lequel, dans le cas où la modification dépasse la distance de seuil de modification prédéfinie, l'exécution des instructions par le processeur (207) fait en outre que le véhicule place les limites modifiées en tant que limites (507) obtenues par une modification égale à la distance de seuil de modification (501).

6. Véhicule robotisé selon l'une quelconque des revendications précédentes, dans lequel la détection de la modification comprend : la détection d'un objet (105B) à l'intérieur de la zone de travail (104), l'objet ayant une limite intérieure ; la mise à jour de la zone de travail (104) avec la limite intérieure de l'objet (105B) dans le cas où l'objet (105B) est détecté avec un motif de répétition prédéfini.

7. Véhicule robotisé selon la revendication 6, dans lequel le motif de répétition satisfait à l'une quelconque des conditions suivantes : l'objet est détecté pendant au moins N fois prédéfinies pendant un intervalle de temps ou un intervalle d'opération mobile ; l'objet (105B) est détecté avec une fréquence minimale prédéfinie pendant un intervalle de temps prédéfini ou un intervalle d'opération mobile.

8. Véhicule robotisé selon l'une quelconque des revendications précédentes, où le véhicule comprend un ensemble de points de grille (600) de coordonnées discrètes, où un premier ensemble de points (601) des points de grilles (600) a des valeurs de statuts représentant les limites (107, 109) de la zone de travail (104) et un deuxième ensemble de points (603) des points de grille (600) a des valeurs de statut représentant la zone de travail (104), où, éventuellement, chaque point des points de grille (600) est associé avec une valeur de qualité indiquant une précision de la détermination de la position du véhicule lorsque le véhicule est au point, où le trajet est planifié en utilisant des points ayant une valeur de qualité supérieure à un seuil prédéfini.

9. Véhicule robotisé selon la revendication 8, la mise à jour de la zone de travail (104) comprend des points d'attribution du premier ensemble (601) vers le deuxième ensemble (603) en modifiant les valeurs de statut des points attribués ou des points d'attribution du deuxième ensemble (603) vers le premier ensemble (601) en modifiant les valeurs de statut des points attribués et en déterminant des valeurs de qualité des points attribués.

10. Véhicule robotisé selon la revendication 9, comprenant en outre la détermination de la valeur de qualité des points associés au deuxième ensemble comprenant la prédiction de la valeur de qualité par interpolation de valeurs de qualité de points du deuxième ensemble au voisinage des points associés, ou en utilisant la valeur de qualité de points du deuxième ensemble qui sont adjacents aux points associés en tant que qualité de valeur des points associés.

11. Véhicule robotisé selon l'une quelconque des revendications précédentes 9 à 10, le véhicule comprenant un récepteur (215) de système de navigation globale par satellite GNSS, où l'exécution des instructions par le processeur fait en sorte que le véhicule, pour chaque point d'un sous-ensemble de points de grille, à différents premiers points dans le temps, effectue un processus d'initialisation, le processus d'initialisation comprenant : la réception au premier point dans le temps d'un premier ensemble de signaux GNSS à partir d'une base de véhicule ; la réception au premier point dans le temps, d'un deuxième ensemble de signaux GNSS à partir du récepteur de GNSS ; la détermination d'une précision d'une détermination de localisation, la détermination de la localisation étant basée sur le deuxième ensemble de signaux GNSS, la détermination de la précision étant basée sur une comparaison des qualités des signaux du premier ensemble de signaux GNSS et du deuxième ensemble de signaux GNSS, où la valeur de qualité du point est la précision déterminée.

12. Véhicule robotisé selon l'une quelconque des revendications précédentes, dans lequel l'exécution des instructions par le processeur (207) fait en sorte que le véhicule reçoive une entrée d'utilisateur indiquant la distance de seuil de modification (501) prédéfinie.

13. Véhicule robotisé selon l'une quelconque des revendications précédentes, dans lequel la donnée du capteur est reçue à partir d'au moins un élément quelconque parmi : un ou plusieurs capteurs ultrasonores ; un ou plusieurs capteurs réflex infrarouges ; et un ou plusieurs scanners lasers (219).

14. Procédé d'exécution d'une opération mobile dans une zone de travail en conformité avec un trajet planifié par un véhicule robotisé, l'opération mobile comprenant une culture du sol, le procédé comprenant :
- la détection (301), dans une position actuelle du véhicule, d'une modification de limites actuelles de la zone de travail, dans lequel la détection de la modification des limites actuelles a pour résultat une augmentation de la zone de travail, dans lequel la détection de la modification (417) est effectuée sur la base de données de capteur caractérisant une modification d'une caractéristique d'un objet (105) définissant les limites actuelles ;
- en réponse à la détection, la mise à jour (303) de la zone de travail en modifiant des limites actuelles de la zone de travail, les limites modifiées devenant les limites actuelles, dans lequel la mise à jour est effectuée de sorte que la modification ne dépasse pas une distance de seuil de modification prédéfinie ; et
- l'exécution (305) de l'opération mobile en utilisant un trajet replanifié sur la base de la modification détectée.

15. Produit-programme informatique comprenant des instructions exécutables par ordinateur pour faire en sorte qu'un véhicule robotisé selon l'une quelconque des revendications 1 à 13 exécute le procédé selon la revendication 14.
